# EUROPEAN PATENT APPLICATION

(11) **EP 4 737 024 A1**
(43) Date of publication of application: **06.05.2026**
(21) Application number: 24895486.9
(22) Date of filing: 27.05.2024
(51) Int. Cl.: B21D 5/04

(54) **TAB BENDING MECHANISM AND BATTERY ASSEMBLING SYSTEM**

(30) Priority: 30.11.2023 CN 202323283910 U
(71) Applicant: Contemporary Amperex Technology Co., Limited, Ningde, Fujian 352100 (CN)
(72) Inventor: WANG, Tengteng, Ningde, Fujian 352100 (CN); PAN, Wensheng, Ningde, Fujian 352100 (CN); QUE, Tianxiang, Ningde, Fujian 352100 (CN); FAN, Xiang, Ningde, Fujian 352100 (CN)
(74) Representative: Kraus & Lederer PartGmbB
(86) International application number: PCT/CN2024/095557
(87) International publication number: WO 2025/112376

(57) **Abstract**

The present application provides a tab bending mechanism and a battery assembling system. The tab bending mechanism includes a first driving assembly, a supporting frame, and a tab pressing plate. The first driving assembly is configured to provide a driving force for a reciprocating movement in a first direction; the supporting frame is mounted on the first driving assembly to be driven by the first driving assembly; and the tab pressing plate is mounted on the supporting frame to be driven by the supporting frame to perform a reciprocating movement relative to a tab portion of a battery cell; where the first driving assembly is configured to drive the supporting frame to drive the tab pressing plate to move in the first direction, so that the tab pressing plate can move to be in contact with the tab portion and press the tab portion onto a terminal post of the battery cell. In the above manner, the tab portion of the battery cell is capable of being bent.

## Description

The present application claims priority to Chinese Patent Application No. 2023232839109, filed on November 30, 2023 and entitled "TAB BENDING MECHANISM AND BATTERY ASSEMBLING SYSTEM", which is incorporated herein by reference in its entirety.

### TECHNICAL FIELD

The present application relates to the field of battery processing, in particular to a tab bending mechanism and a battery assembling system.

### BACKGROUND

With the development of battery technologies, battery cells are used in increasingly more fields, and have gradually replaced traditional fossil energy in the field of automotive power. Battery cells can store chemical energy and convert the chemical energy into electrical energy in a controllable manner. In recyclable battery cells, active substances can be activated by charging for reuse after discharge.

Battery cells often have different models and structures, and therefore, different battery cells often require corresponding production devices for production. At present, tab portions of most battery cells do not need to be bent, so there is no relatively mature special device that can bend tab portions of battery cells.

In addition, the above description is only used to provide background information related to the present application and does not necessarily constitute related technology.

### SUMMARY OF THE INVENTION

In view of the above problems, the present application provides a tab bending mechanism and a battery assembling system, which are capable of bending a tab of a battery cell.

In a first aspect, an embodiment of the present application provides a tab bending mechanism, which includes: a first driving assembly, a supporting frame, and a tab pressing plate; the first driving assembly being configured to provide a driving force for a reciprocating movement in a first direction; the supporting frame being mounted on the first driving assembly to be driven by the first driving assembly; and the tab pressing plate being mounted on the supporting frame to be driven by the supporting frame to perform a reciprocating movement relative to a tab portion of a battery cell; where the first driving assembly is configured to drive the supporting frame to drive the tab pressing plate to move in the first direction, so that the tab pressing plate can move to be in contact with the tab portion and press the tab portion onto a terminal post of the battery cell.

In the above manner, the tab pressing plate is capable of bending the tab portion in a process of approaching the battery cell. In addition, the tab pressing plate can bend tab portions of battery cells in batches through the reciprocating movement.

In some embodiments, the supporting frame includes a supporting main body, a first supporting member, and a second supporting member, the supporting main body is mounted on the first driving assembly, the first supporting member is mounted on the supporting main body, the second supporting member is mounted on the first supporting member, and the tab pressing plate is mounted on the second supporting member.

In the above manner, the first driving assembly can drive, through the supporting frame, the tab pressing plate to move relative to the tab portion of the battery cell, so as to bend the tab portion of the battery cell. By configuring the supporting frame to include the supporting main body, the first supporting member, and the second supporting member, a structural design and assembling of the supporting frame can be facilitated.

In some embodiments, the tab bending mechanism further includes a dedusting assembly, and the dedusting assembly is mounted on the second supporting member and includes an air extraction channel. When the tab pressing plate moves to press the tab portion onto the terminal post of the battery cell, the dedusting assembly is driven by the second supporting member and enables the air extraction channel to be in gas communication with a region where the tab portion is located.

In the above manner, the possibility of welding slag, smoke, and dust entering the interior of the battery cell in the bending process of the tab portion is capable of being reduced.

In some embodiments, the supporting frame further includes a second driving assembly, and the second driving assembly is connected between the first supporting member and the second supporting member, and is configured to drive the second supporting member to drive the tab pressing plate to perform a reciprocating movement relative to the tab portion of the battery cell in a second direction. The second direction is perpendicular to the first direction. The second driving assembly is configured to drive the second supporting member to drive the tab pressing plate to move to be in contact with the tab portion and pre-bend the tab portion.

In the above manner, the possibility of wrinkles being generated on the tab portion in the bending process can be reduced by pre-bending.

In some embodiments, the first driving assembly is configured to, after the second driving assembly drives the tab pressing plate to pre-bend the tab portion, drive the supporting frame to drive the tab pressing plate to press the tab portion onto the terminal post of the battery cell; or the first driving assembly is configured to, while the second driving assembly drives the tab pressing plate to pre-bend the tab portion, drive the supporting frame to drive the tab pressing plate to press the tab portion onto the terminal post of the battery cell.

In the above manner, the first driving assembly moves after the second driving assembly pre-bends the tab portion, which is conducive to reducing the possibility of wrinkles on the tab portion in the bending process. When the first driving assembly and the second driving assembly move at the same time, it is conducive to improve the bending efficiency of the tab portion, and is more conducive to reducing the possibility of wrinkles on the tab portion in the bending process.

In some embodiments, a position-limiting member is arranged on the first supporting member, and the position-limiting member is configured to perform position-limiting on the second supporting member when the second supporting member moves away from the tab portion in the second direction.

In the above manner, the possibility of the second supporting member exceeding a preset range during the movement is capable of being reduced.

In some embodiments, the dedusting assembly defines a light-transmitting structure in the first direction, and the light-transmitting structure is arranged toward the tab portion.

In the above manner, laser is capable of passing through the light-transmitting structure to weld the bent tab portion, so that the tab portion is capable of reliably maintaining a bent state.

In some embodiments, the tab bending mechanism further includes a battery cell fixing assembly, and the battery cell fixing assembly is configured to support and fix the battery cell and to arrange the tab portion of the battery cell toward the tab pressing plate.

In the above manner, the battery cell is capable of being reliably fixed in the bending process, thereby improving a bending efficiency of the tab portion.

In some embodiments, the tab bending mechanism further includes a blowing assembly, and the blowing assembly is mounted on the supporting frame. The blowing assembly has a blowing port. The blowing port faces a side surface of the tab portion and is configured to pre-bend the tab portion by blowing air to the side surface.

In the above manner, the structure of the tab bending mechanism is capable of being simplified, so that the tab bending mechanism is simpler and more reliable.

In some embodiments, the first direction is a horizontal direction, and the tab pressing plate is configured to bend the tab portion vertically downward to press it onto a vertical surface of the terminal post.

In the above manner, the tab portion can be bent when the tab portion is in a lying state, thereby reducing the possibility of impurities such as welding slag, smoke, and dust entering the interior of the battery cell under the action of gravity.

In some embodiments, the tab pressing plate defines a hollow region. When the tab pressing plate presses the tab portion onto the terminal post of the battery cell, the hollow region exposes a region to be welded of the tab portion.

In the above manner, when a tab welding mechanism bends the tab portion, the region to be welded of the tab portion can be welded by laser welding, so that the tab portion is capable of reliably maintaining the bent state.

In a second aspect, an embodiment of the present application provides a battery assembling system, including the tab bending mechanism according to any one of the above embodiments.

In some embodiments, a battery cell includes a case, an end cover, and an electrode assembly. The case has an open end, a terminal post is arranged on a wall of the case opposite to the open end, the terminal post has a through hole, and the case and the end cover are connected to form an accommodating cavity in communication with the through hole. An active substance coating portion of the electrode assembly is arranged in the case, and a tab portion of the electrode assembly penetrates through the through hole and is connected to a side of the terminal post facing away from the accommodating cavity. The battery assembling system includes a delivery device and an assembling device, the delivery device is configured to deliver a structure to be assembled to each station of the assembling device; the station of the assembling device at least includes a tab welding apparatus, a case-put-in apparatus, a tab penetrating apparatus, a terminal post welding apparatus, and an end cover welding apparatus; where the tab welding apparatus is configured to weld a plurality of tab plates of the electrode assembly to form a tab portion; the case-put-in apparatus is configured to load the electrode assembly into the case from the open end; the tab penetrating apparatus is configured to clamp the tab portion to penetrate through the through hole when the electrode assembly is loaded into the case; the terminal post welding apparatus includes a tab bending mechanism and a welding mechanism, the welding mechanism is configured to weld the tab portion penetrating through the through hole and pressed onto the terminal post to the side of the terminal post facing away from the accommodating cavity, and the end cover welding apparatus is configured to weld the end cover to the open end of the case.

### DESCRIPTION OF DRAWINGS

By reading the detailed description of the preferred implementations below, various other advantages and benefits will become apparent to those of ordinary skill in the art. The drawings are used for the purpose of illustrating the preferred embodiments only and are not to be considered a limitation to the present application. Moreover, in all of the drawings, like reference numerals represent like components. In the drawings:
FIG. 1 is an exploded schematic structural diagram of a battery cell according to one or more embodiments;
FIG. 2 is a schematic sectional diagram of a tab portion of the battery cell in FIG. 1;
FIG. 3 is a schematic structural diagram of a tab bending mechanism according to one or more embodiments;
FIG. 4 is a schematic structural diagram of the tab bending mechanism in FIG. 3 from another perspective;
FIG. 5 is a schematic diagram illustrating a bending principle of a tab portion according to one or more embodiments;
FIG. 6 is a schematic sectional diagram of a tab pressing plate along a horizontal plane according to one or more embodiments;
FIG. 7 is a schematic structural diagram of another tab bending mechanism according to one or more embodiments; and
FIG. 8 is a schematic structural diagram of the tab bending mechanism in FIG. 7 from another perspective.

Reference numerals in the Detailed Description are as follows:
100: Battery cell; 101: Tab portion; 102: End cover; 1020: Terminal post;
500: Tab bending mechanism; 510: First driving assembly; 520: Supporting frame; 521: Supporting main body; 522: First supporting member; 523: Second supporting member; 524: Second driving assembly; 525: Position-limiting member; 530: Tab pressing plate; 531: Gas channel; 532: Hollow region; 540: Dedusting assembly; 541: Air extraction channel; 542: Light-transmitting structure; 543: Dedusting cover; 550: Battery cell fixing assembly; 560: Blowing assembly.

### DETAILED DESCRIPTION

Embodiments of the technical solutions of the present application will be described in detail below with reference to the drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as commonly understood by those skilled in the technical field to which the present application belongs. The terms used herein are intended only for the purpose of describing specific embodiments and are not intended to limit the present application. The terms "include" and "have" and any variations thereof in the specification and the claims of the present application and in the above Description of Drawings are intended to encompass non-exclusive inclusion.

In the description of the embodiments of the present application, the technical terms "first", "second", and the like, are used only to distinguish between different objects and are not to be understood as indicating or implying a relative importance or implicitly specifying the number, particular order, or primary and secondary relationship of the technical features indicated. In the description of the embodiments of the present application, the meaning of "a plurality of' is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiments of the present application, the term "a plurality of" refers to more than two (including two), and likewise, "a plurality of groups" refers to more than two groups (including two groups), and "a plurality of plates" refers to more than two plates (including two plates).

In the description of the embodiments of the present application, orientation or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientation or positional relationships shown in the accompanying drawing, and are only for the convenience of describing the embodiments of the present application and simplifying the description, and do not indicate or imply that the apparatus or element referred to must have a specific orientation, be constructed and operated in a specific orientation, and therefore cannot be construed as a restriction on the embodiments of the present application.

In the description of the embodiments of the present application, unless otherwise expressly specified or limited, the technical terms "mounted", "linked", "connected", "fixed" and other terms shall be understood broadly, for example, they may be fixed, detachable, or integral, or mechanically or electrically connected, or directly linked, or indirectly linked through an intermediate medium, and may be communicated internally or interacted between two elements. For those of ordinary skill in the art, the specific meaning of the above terms in the present application may be understood on a case-by-case basis.

With the development of battery technologies, battery cells (also referred to as batteries or battery cells) are used in increasingly more fields, and have gradually replaced traditional fossil energy in the field of automotive power. Battery cells can store chemical energy and convert the chemical energy into electrical energy in a controllable manner. In recyclable battery cells, active substances can be activated by charging for reuse after discharge.

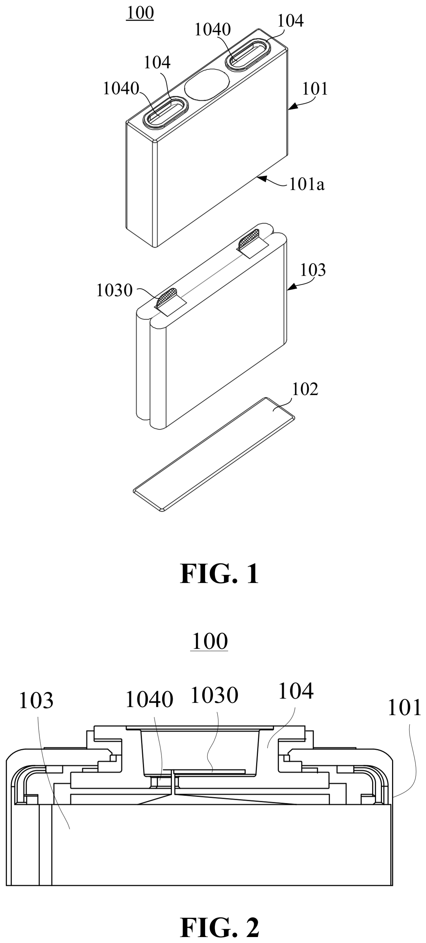

Referring to FIG. 1 and FIG. 2, according to one or more embodiments of the present application, the battery cell 100 may include a case 101, an end cover 102, and an electrode assembly 103. The case 101 has an open end 101a. A terminal post 104 is arranged on a wall of the case 101 opposite to the open end 101a. The terminal post 104 has a through hole 1040. The case 101 and the end cover 102 are connected to form an accommodating cavity in communication with the through hole 104. An active substance coating portion of the electrode assembly 103 is arranged in the case 101. A tab portion 1030 of the electrode assembly 103 passes through the through hole 1040 and is connected to a side of the terminal post 104 facing away from the accommodating cavity.

In the embodiments of the present disclosure, the battery cell may be a secondary battery. The secondary battery refers to a battery cell that can be used continuously by activating the active material through charging after the battery cell is discharged. Each battery cell may also be a primary battery. The battery cell includes, but is not limited to, a lithium-ion battery, a sodium-ion battery, a sodium/lithium-ion battery, a lithium metal battery, a sodium metal battery, a lithium-sulfur battery, a magnesium-ion battery, a nickel-hydrogen battery, a nickel-cadmium battery, a lead storage battery, and the like.

As described above, in the battery cell structure, the tab portion of the battery cell needs to penetrate the terminal post during the process of connecting the terminal post, and be welded to an outer surface of the terminal post after being bent. However, there is no relatively mature device on the market that can bend the battery cell.

Therefore, in order to conveniently generate the above battery cell, the present application provides a tab bending mechanism capable of bending the tab portion, which may include a first driving assembly, a supporting frame, and a tab pressing plate; the first driving assembly being configured to provide a driving force for a reciprocating movement in a first direction; the supporting frame being mounted on the first driving assembly to be driven by the first driving assembly; and the tab pressing plate being mounted on the supporting frame to be driven by the supporting frame to perform a reciprocating movement relative to a tab portion of a battery cell; where the first driving assembly is configured to drive the supporting frame to drive the tab pressing plate to move in the first direction, so that the tab pressing plate can move to be in contact with the tab portion and press the tab portion onto a terminal post of the battery cell.

In the above manner, the tab portion may be capable of being bent when the tab pressing plate approaches the battery cell. In addition, the tab can bend tab portions of battery cells in batches through the reciprocating movement.

The tab bending mechanism disclosed in the embodiment of the present application may be a part of a battery assembling system. The battery assembling system can assemble finished battery cells from various components and/or semi-finished batteries. The finished battery cell after completing the assembling can be used in an electrical apparatus using the battery cell as a power source or various energy storage systems using the battery cell as an energy storage element. The electrical apparatus can be but not limited to mobile phones, tablet computers, laptops, electric toys, electric tools, battery vehicles, electric vehicles, ships, spacecrafts, and the like. The electric toy may include a fixed or mobile electric toy, such as a game machine, an electric vehicle toy, an electric ship toy, and an electric airplane toy. The spacecraft may include an airplane, a rocket, a space shuttle, a spaceship, and the like. The tab bending mechanism disclosed in the embodiment of the present application can press the tab portion penetrating the through hole onto the surface on the side of the terminal post facing away from the accommodating cavity. The battery assembling system disclosed by the embodiment of the present application can be used to assemble the above-mentioned battery cell.

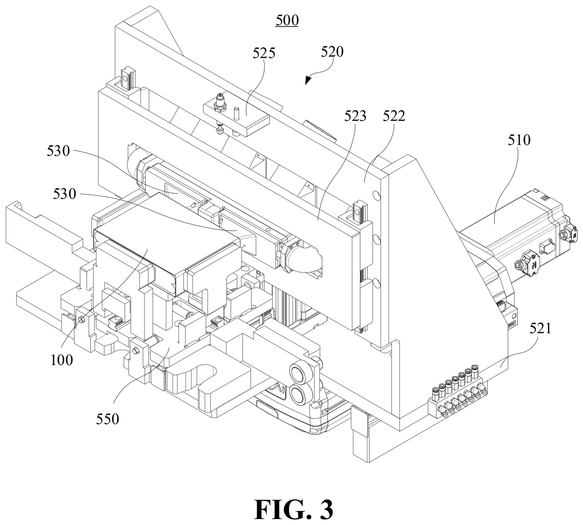

According to one or more embodiments of the present application, referring to FIG. 3, FIG. 4, and FIG. 5, a tab bending mechanism 500 may include: a first driving assembly 510, a supporting frame 520, and a tab pressing plate 530; the first driving assembly 510 being configured to provide a driving force for a reciprocating movement in a first direction; the supporting frame 520 being mounted on the first driving assembly 510 to be driven by the first driving assembly 510; and the tab pressing plate 530 being mounted on the supporting frame 520 to be driven by the supporting frame 520 to perform a reciprocating movement relative to a tab portion 101 of a battery cell 100; where the first driving assembly 510 is configured to drive the supporting frame 520 to drive the tab pressing plate 530 to move in the first direction to be in contact with the tab portion 101 and press the tab portion 101 onto a terminal post 1020 of the battery cell 100.

The bending of the tab portion 101 may refer to the tab portion 101 being pressed and attached to the surface of the terminal post 1020. The first driving assembly 510 may include a driving motor. The first direction may be a horizontal direction. The first driving assembly 510 drives, through the supporting frame 520, the tab pressing plate 530 to press the tab portion 101 onto the terminal post 1020 of the battery cell 100.

In the above manner, the tab portion 101 is capable of being bent when the tab pressing plate 530 approaches the battery cell 100. In addition, the tab pressing plate 530 can bend tab portions 101 of battery cells 100 in batches through the reciprocating movement.

According to one or more embodiments of the present application, the supporting frame 520 may include a supporting main body 521, a first supporting member 522, and a second supporting member 523. The supporting main body 521 is mounted on the first driving assembly 510, the first supporting member 522 is mounted on the supporting main body 521, the second supporting member 523 is mounted on the first supporting member 522, and the tab pressing plate 530 is mounted on the second supporting member 523.

In the above manner, the first driving assembly 510 can drive, through the supporting frame 520, the tab pressing plate 530 to move relative to the tab portion 101 of the battery cell 100, so as to bend the tab portion 101 of the battery cell 100. Moreover, by configuring the supporting frame 520 to include the supporting main body 521, the first supporting member 522, and the second supporting member 523, a structural design and assembling of the supporting frame 520 can be facilitated.

According to one or more embodiments of the present application, the tab bending mechanism 500 further includes a dedusting assembly 540, and the dedusting assembly 540 is mounted on the second supporting member 523 and includes an air extraction channel 541. When the tab pressing plate 530 moves to press the tab portion 101 onto the terminal post 1020 of the battery cell 100, the dedusting assembly 540 is driven by the second supporting member 523 and enables the air extraction channel 541 to be in gas communication with a region where the tab portion 101 is located.

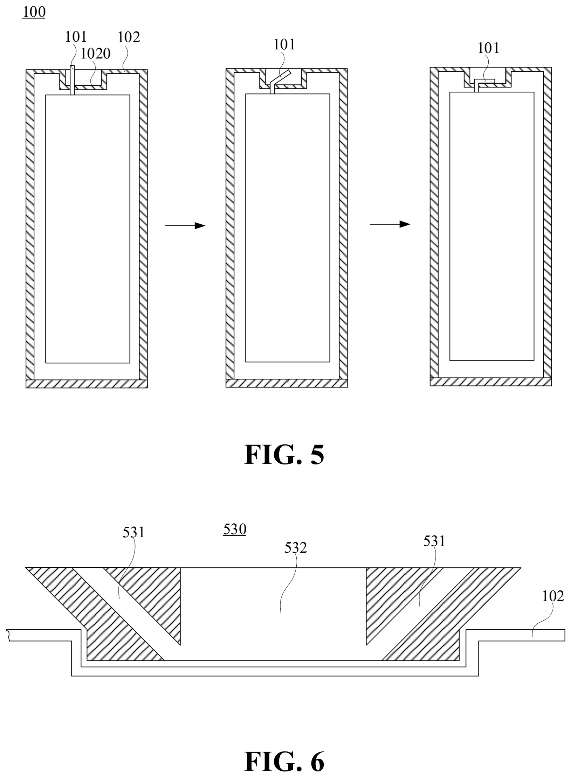

The dedusting assembly 540 may include a suction device and a connecting pipeline. The suction device can be in gas communication with the air extraction channel 541 through the connecting pipe. Referring to FIG. 6, a gas channel 531 may be opened inside the tab pressing plate 530, one end of the gas channel 531 is in communication with the air extraction channel 541, and the other end penetrates a surface of the tab pressing plate 530 facing the tab portion 101, so that the air extraction channel 541 is capable of being in gas communication with the region where the tab portion 101 is located.

In the above manner, the possibility of welding slag, smoke, and dust entering the interior of the battery cell 100 in the bending process of the tab 101 is capable of being reduced.

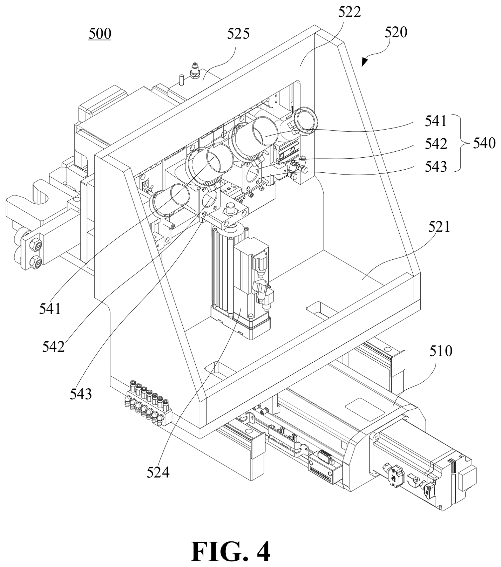

According to one or more embodiments of the present application, referring to FIG. 3 and FIG. 4, the supporting frame 520 further includes a second driving assembly 524, and the second driving assembly 524 is connected between the first supporting member 522 and the second supporting member 523, and is configured to drive the second supporting member 523 to drive the tab pressing plate 530 to perform a reciprocating movement relative to the tab portion 101 of the battery cell 100 in a second direction. The second direction is perpendicular to the first direction. The second driving assembly 524 is configured to drive the second supporting member 523 to drive the tab pressing plate 530 to move to be in contact with the tab portion 101 and pre-bend the tab portion 101.

The pre-bending may refer to a state where the tab 101 is not pressed to be attached on the surface of the terminal post 1020 before being bent, and a preset angle is formed between the tab portion 101 and the surface of the terminal post 1020. The preset angle may range from 15 degrees to 75 degrees. The second supporting member 523 may be slidably arranged on a guide rail of the first supporting member 522, and an extension direction of the guide rail may be parallel to the second direction. The second direction may be a vertical direction. The second driving assembly 524 may be a driving motor and is arranged on the first supporting member 522 to drive the second supporting member 523 to move along the guide rail (in the second direction) relative to the first supporting member 522.

When the tab portion 101 is not pre-bent, for example, the surfaces of the tab portion 101 and the terminal post 1020 are substantially perpendicular, and in this case, directly bending the tab portion 101 may easily cause wrinkles of the tab portion 101. In the above manner, the possibility of wrinkles being generated on the tab portion 101 in the bending process can be reduced by pre-bending.

According to one or more embodiments of the present application, the first driving assembly 510 is configured to, after the second driving assembly 524 drives the tab pressing plate 530 to pre-bend the tab portion 101, drive the supporting frame 520 to drive the tab pressing plate 530 to press the tab portion 101 onto the terminal post 1020 of the battery cell 100; or the first driving assembly 510 is configured to, while the second driving assembly 524 drives the tab pressing plate 530 to pre-bend the tab portion 101, drive the supporting frame 520 to drive the tab pressing plate 530 to press the tab portion 101 onto the terminal post 1020 of the battery cell 100.

That is, the first driving assembly 510 may work after the second driving assembly 524, or may work simultaneously with the second driving assembly 524.

In the above manner, the first driving assembly 510 moves after the second driving assembly 524 pre-bends the tab portion 101, which is conducive to reducing the possibility of wrinkles on the tab portion 101 in the bending process. When the first driving assembly 510 and the second driving assembly 524 move at the same time, it is conducive to improving the bending efficiency of the tab portion 101; moreover, it is more conducive to reducing the possibility of wrinkles on the tab portion in the bending process. This is because the simultaneous movement of the first driving assembly 510 and the second driving assembly 524 will generate a force on the tab portion to be bent that is always away from the root of the tab portion, thereby preventing the tab portion from moving in the opposite direction in the bending process, thereby achieving a better bending effect of the tab portion.

According to one or more embodiments of the present application, a position-limiting member 525 is arranged on the first supporting member 522, and the position-limiting member 525 is configured to perform position-limiting on the second supporting member 523 when it moves away from the tab 101 in the second direction.

The position-limiting member 525 may be arranged on the first supporting member 522 and located above the second supporting member 523.

In the above manner, the possibility of the second supporting member 523 exceeding a preset range during the movement is capable of being reduced.

According to one or more embodiments of the present application, the dedusting assembly 540 defines a light-transmitting structure 542 in the first direction, and the light-transmitting structure 542 is arranged toward the tab portion 101.

The dedusting assembly 540 may have a dedusting cover 543, and the dedusting cover 543 may be provided with the light-transmitting structure 542. The light-transmitting structure 542 may be a hollow structure or a light-transmittable structure opened in the dedusting cover 543. The light-transmitting structure 542 may be in communication with the air extraction channel 541. Laser can pass through the light-transmitting structure 542 to weld the bent tab portion 101.

In the above manner, the laser is capable of passing through the light-transmitting structure 542 to weld the bent tab portion 101, so that the tab portion 101 is capable of reliably maintaining a bent state.

According to one or more embodiments of the present application, the tab bending mechanism 500 further includes a battery cell fixing assembly 550, and the battery cell fixing assembly 550 is configured to support and fix the battery cell 100 and to arrange the tab portion 101 of the battery cell 100 toward the tab pressing plate 530. The battery cell fixing assembly 550 may include a clamp and a driving mechanism, and the clamp may be driven by the driving mechanism to clamp or release the battery cell 100.

In the above manner, the battery cell is capable of being reliably fixed in the bending process, thereby improving a bending efficiency of the tab portion 101.

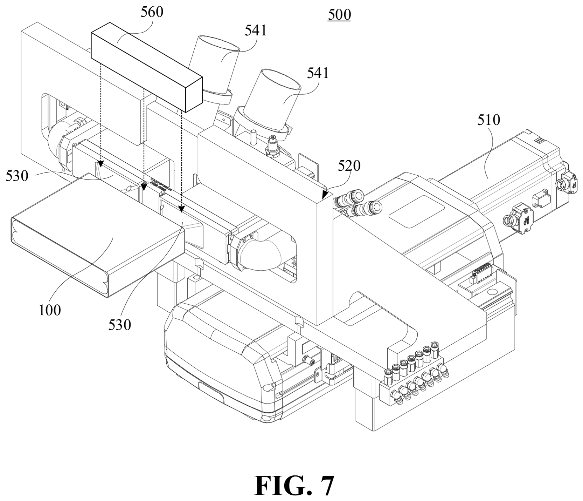

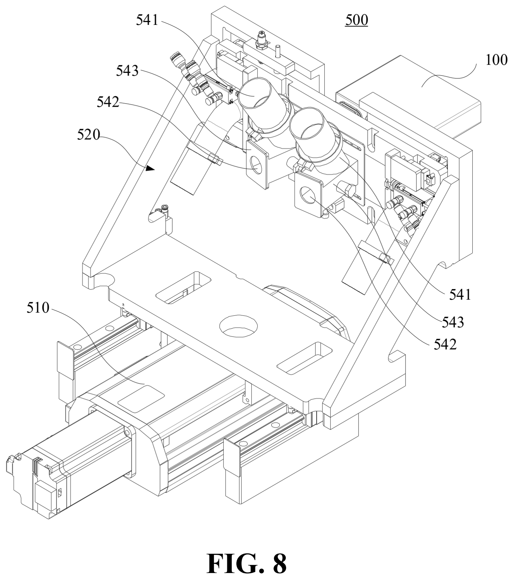

According to one or more embodiments of the present application, referring to FIG. 7 and FIG. 8, the tab bending mechanism 500 further includes a blowing assembly 560, and the blowing assembly 560 is mounted on the supporting frame 520. The blowing assembly 560 has a blowing port. The blowing port faces a side surface of the tab portion 101 and is configured to pre-bend the tab portion 101 by blowing air to the side surface.

That is to say, the tab portion 101 can be pre-bent by airflow instead of a mechanical action, thereby realizing contactless pre-bending. This method has no contact force on the surface of the tab portion 101, preventing the tab portion 101 from being damaged in the bending process. The direction of the airflow blown out of the blowing port may be substantially perpendicular to the first direction. Furthermore, the direction of the airflow may be from top to bottom.

In the above manner, the structure of the tab bending mechanism 500 is capable of being simplified, so that the tab portion bending mechanism 500 is simpler and more reliable.

Of course, in other embodiments, the supporting frame 520 as a whole can be used as a fixing structure, so that the first driving assembly 510 can drive the supporting frame 520 to drive the tab pressing plate 530 to approach the battery cell 100, and then bend the tab portion 101, that is, bend the tab portion 101 and press it onto the terminal post 1020 of the battery cell 100. The tab portion 101 of the battery cell 100 applied in this embodiment can be pre-bent manually or mechanically in advance, so that a preset angle is presented between the tab portion 101 and the surface of the terminal post 1020, and the preset angle can range from 15 degrees to 75 degrees, for example, 15 degrees, 20 degrees, 35 degrees, 40 degrees, 45 degrees, 65 degrees, 75 degrees, and the like. In this case, the tab bending mechanism 500 may include neither the second driving assembly 524 nor the blowing assembly 560.

In the above manner, the pre-bent tab portion 101 of the battery cell 100 can be completely bent by the tab bending mechanism 500 according to the embodiment of the present application, so that the tab portion 101 is pressed onto the terminal post 1020.

According to one or more embodiments of the present application, the first direction is a horizontal direction, and the tab pressing plate 530 is configured to bend the tab portion 101 vertically downward to press it onto a vertical surface of the terminal post 1020.

That is to say, the tab portion 101 can be bent when the battery cell 100 is in a lying setting state (the terminal post 1020 is oriented in a horizontal direction), and compared with bending the tab portion 101 when the battery cell 100 is in an upright state (the terminal post 1020 is oriented in a vertical direction), during the welding process of the tab portion 101, welding slag and dust are not easy to enter the interior of the battery cell 100 under the action of gravity.

In the above manner, the tab portion 101 can be bent when the tab portion 101 is in a lying state, thereby reducing the possibility of impurities such as welding slag, smoke, and dust entering the battery cell 100 under the action of gravity.

According to one or more embodiments of the present application, the tab pressing plate 530 defines a hollow region 532. When the tab pressing plate 530 presses the tab portion 101 onto the terminal post 1020 of the battery cell 100, the hollow region 532 exposes a region to be welded of the tab portion 101.

One end of the hollow region 532 may be in communication with the light-transmitting structure 542, and the other end may penetrate the surface of the tab pressing plate 530 facing the tab portion 101. The laser can pass through the light-transmitting structure 542 and the hollow region 532 to weld the bent tab portion 101. In addition, the hollow region 532 may be in communication with the gas channel 531, and an extension direction of the gas channel 531 may be inclined with respect to the first direction and the second direction.

In the above manner, when a tab welding mechanism bends the tab portion 101, the region to be welded of the tab portion 101 can be welded by laser welding, so that the tab portion 101 is capable of reliably maintaining the bent state.

According to one or more embodiments of the present application, a battery assembling system may include the tab bending mechanism 500 according to any one of the above embodiments.

According to one or more embodiments of the present application, the battery assembling system includes a delivery device and an assembling device, the delivery device is configured to deliver a structure to be assembled to each station of the assembling device; and the station of the assembling device at least includes a tab welding apparatus, a case-put-in apparatus, a tab penetrating apparatus, a terminal post welding apparatus, and an end cover welding apparatus. The tab welding apparatus is configured to weld a plurality of tab plates of the electrode assembly to form a tab portion; the case-put-in apparatus is configured to load the electrode assembly into the case from the open end; the tab penetrating apparatus is configured to clamp the tab portion to penetrate through the through hole when the electrode assembly is loaded into the case; the terminal post welding apparatus includes a tab bending mechanism and a welding mechanism, the welding mechanism is configured to weld the tab portion penetrating through the through hole and pressed onto the terminal post to the side of the terminal post facing away from the accommodating cavity, and the end cover welding apparatus is configured to weld the end cover to the open end of the case.

It should be noted that, in the present embodiment, the delivery device includes a delivery line, and the delivery line may be a delivery structure formed by a delivery roller driven by a motor and a delivery belt, or a delivery structure formed by motor-driven delivery chain links hinged together, or an AGV delivery cart, which can realize delivery in at least one direction and can support and ensure the stability of the structure to be assembled.

The tab welding apparatus aims to form the tab portion after pre-welding the tab plate, and is optionally an ultrasonic welding device, which can ensure that the tab portion is welded in a clamped and stable state. The case-put-in apparatus is a pushing mechanism or a clamping mechanism, which can stably move the electrode assembly toward the open end of the case and enter the accommodating cavity through the open end. Similarly, the tab penetrating apparatus may adopt a clamping structure or a guiding structure, which can guide the tab portion to smoothly penetrate the through hole without interfering with the case. The terminal post welding apparatus aims to achieve welding between the tab portion and the terminal post, and is optionally a laser welding device. The end cover welding apparatus aims to achieve circumferential edge welding of the end cover and the open end of the case, and is also a laser welding device.

In addition, according to one or more embodiments of the present application, the terminal post welding apparatus may further include a loading mechanism, a tab flipping mechanism, a tab delivery mechanism, and a unloading mechanism. The loading mechanism may include a conveyor belt for providing the battery cell. The tab flipping mechanism may include a rotatable mechanical arm for flipping the battery cell in an upright state transported by the conveyor belt, so that the battery cell enter the tab delivery mechanism in a lying state. The tab delivery mechanism may include a driving motor, a slide rail and/or a conveyor belt, or the like. A battery cell fixing assembly may be arranged on the slide rail or the conveyor belt to move under the action of the driving motor and then deliver the battery cell to the tab bending station. When the battery cell moves to the tab bending station in with the battery cell fixing assembly, the tab of the battery cell can be bent by the tab bending mechanism and welded by the welding mechanism. The unloading mechanism may include two conveyor belts, one of which is configured to deliver unqualified battery cells, and the other is configured to deliver qualified battery cells.

In addition, the assembling device is not limited to including the tab welding apparatus, the case-put-in apparatus, the tab penetrating apparatus, the terminal post welding apparatus, and the end cover welding apparatus. For example, when there are a plurality of, for example, two electrode assemblies, the assembling device further includes a matching apparatus, and the matching apparatus is configured to stack the plurality of electrode assemblies so that the tab plates of the two electrode assemblies are roughly opposite to each other, and therefore, the delivery structure can convey the matched electrode assemblies to the tab welding apparatus for welding the tab plates, thereby facilitating the formation of the tab portion. For another example, in order to ensure the reliability of the battery assembling process, a dedusting station, an NG detection station, and the like may be added between any two adjacent stations, which is not limited in this embodiment. It should be noted that, in the present embodiment, the delivery device includes a delivery line, and the delivery line may be a delivery structure formed by a delivery roller driven by a motor and a delivery belt, or a delivery structure formed by motor-driven delivery chain links hinged together, or an AGV delivery cart, which can realize delivery in at least one direction and can support and ensure the stability of the structure to be assembled.

In addition, the assembling device is not limited to including the tab welding apparatus, the case-put-in apparatus, the tab penetrating apparatus, the terminal post welding apparatus, and the end cover welding apparatus. For example, when there are a plurality of, for example, two electrode assemblies, the assembling device further includes a matching apparatus, and the matching apparatus is configured to stack the plurality of electrode assemblies so that the tab plates of the two electrode assemblies are roughly opposite to each other, and therefore, the delivery structure can convey the matched electrode assemblies to the tab welding apparatus for welding the tab plates, thereby facilitating the formation of the tab portion. For another example, in order to ensure the reliability of the battery assembling process, a dedusting station, an NG detection station, and the like may be added between any two adjacent stations, which is not limited in this embodiment.

In view of the above, according to some embodiments of the present application, a battery assembling system may include a tab bending mechanism 500. The tab bending mechanism 500 may include: a first driving assembly 510, a supporting frame 520, a tab pressing plate 530, a dedusting assembly 540, and a battery cell fixing assembly 550. The first driving assembly 510 is configured to provide a driving force for a reciprocating movement in a first direction; the supporting frame 520 is mounted on the first driving assembly 510 to be driven by the first driving assembly 510; and the tab pressing plate 530 is mounted on the supporting frame 520 to be driven by the supporting frame 520 to perform a reciprocating movement relative to a tab portion 101 of a battery cell 100; where the first driving assembly 510 is configured to drive the supporting frame 520 to drive the tab pressing plate 530 to move to be in contact with the tab portion 101, and bend and press the tab portion 101 onto a terminal post 1020 of the battery cell 100. The supporting frame 520 includes a supporting main body 521, a first supporting member 522, a second supporting member 523, and a second driving assembly 524. The supporting main body 521 is mounted on the first driving assembly 510, the first supporting member 522 is mounted on the supporting main body 521, the second supporting member 523 is mounted on the first supporting member 522, and the tab pressing plate 530 is mounted on the second supporting member 523. The second driving assembly 524 is connected between the first supporting member 522 and the second supporting member 523, and is configured to drive the second supporting member 523 to drive the tab pressing plate 530 to perform a reciprocating movement relative to the tab portion 101 of the battery cell 100 in a second direction. The second direction is perpendicular to the first direction. The second driving assembly 524 is configured to drive the second supporting member 523 to drive the tab pressing plate 530 to move to be in contact with the tab portion 101 and pre-bend the tab portion 101. The first driving assembly 510 is configured to, after the second driving assembly 524 drives the tab pressing plate 530 to pre-bend the tab 101, drive the supporting frame 520 to drive the tab pressing plate 530 to press the tab portion 101 onto the terminal post 1020 of the battery cell 100; or the first driving assembly 510 is configured to, while the second driving assembly 524 drives the tab pressing plate 530 to pre-bend the tab portion 101, drive the supporting frame 520 to drive the tab pressing plate 530 to press the tab portion 101 onto the terminal post 1020 of the battery cell 100. A position-limiting member 525 is arranged on the first supporting member 522, and the position-limiting member 525 is configured to perform position-limiting on the second supporting member 523 when it moves away from the tab portion 101 in the second direction. The dedusting assembly 540 is mounted on the second supporting member 523 and includes an air extraction channel 541. When the tab pressing plate 530 moves to press the tab portion 101 onto the terminal post 1020 of the battery cell 100, the dedusting assembly 540 is driven by the second supporting member 523 and enables the air extraction channel 541 to be in gas communication with a region where the tab portion 101 is located. The dedusting assembly 540 defines a light-transmitting structure 542 in the first direction, and the light-transmitting structure 542 is arranged toward the tab portion 101. The battery cell fixing assembly 550 is configured to support and fix the battery cell 100 and to arrange the tab portion 101 of the battery cell 100 toward the tab pressing plate 530. The first direction is a horizontal direction, and the tab pressing plate 530 is configured to bend the tab portion 101 vertically downward to press it onto a vertical surface of the terminal post 1020. The tab pressing plate 530 defines a hollow region 532. When the tab pressing plate 530 presses the tab portion 101 onto the terminal post 1020 of the battery cell 100, the hollow region 532 exposes a region to be welded of the tab portion 101.

According to other embodiments of the present application, a battery assembling system may include a tab bending mechanism 500. The tab bending mechanism 500 may include: a first driving assembly 510, a supporting frame 520, a tab pressing plate 530, a blowing assembly 560, and a battery cell fixing assembly 550; the first driving assembly 510 being configured to provide a driving force for a reciprocating movement in a first direction; the supporting frame 520 being mounted on the first driving assembly 510 to be driven by the first driving assembly 510; and the tab pressing plate 530 being mounted on the supporting frame 520 to be driven by the supporting frame 520 to perform a reciprocating movement relative to a tab portion 101 of a battery cell 100; where the first driving assembly 510 is configured to drive the supporting frame 520 to drive the tab pressing plate 530 to move to be in contact with the tab portion 101, and bend and press the tab portion 101 onto a terminal post 1020 of the battery cell 100. The blowing assembly 560 is mounted on the supporting frame 520. The blowing assembly 560 has a blowing port. The blowing port faces a side surface of the tab portion 101 and is configured to pre-bend the tab portion 101 by blowing air to the side surface. The dedusting assembly 540 is mounted on the supporting frame 520 and includes an air extraction channel 541. The dedusting assembly 540 defines a light-transmitting structure 542 in the first direction, and the light-transmitting structure 542 is arranged toward the tab portion 101. The battery cell fixing assembly 550 is configured to support and fix the battery cell 100 and to arrange the tab 101 of the battery cell 100 toward the tab pressing plate 530. The first direction is a horizontal direction, and the tab pressing plate 530 is configured to bend the tab portion 101 vertically downward to press it onto a vertical surface of the terminal post 1020. The tab pressing plate 530 defines a hollow region 532. When the tab pressing plate 530 presses the tab portion 101 onto the terminal post 1020 of the battery cell 100, the hollow region 532 exposes a region to be welded of the tab portion 101.

Finally, it should be noted that, the above embodiments are merely used for describing the technical solution of the present application, instead of limiting the present application. Although the present application is described in detail with reference to the foregoing embodiments, those of ordinary skill in the art should understand that they can still make modifications on the technical solution recorded in the above embodiments, or perform equivalent replacements on all or a part of technical features thereof; these modifications or replacements are not intended to make the essences of the corresponding technical solutions depart from the scope of the technical solutions of the embodiments of the present application, which shall fall within the scope of the claims and the specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A tab bending mechanism, comprising:
a first driving assembly configured to provide a driving force for a reciprocating movement in a first direction;
a supporting frame mounted on the first driving assembly so as to be driven by the first driving assembly;
a tab pressing plate mounted on the supporting frame so as to be driven by the supporting frame to perform a reciprocating movement relative to a tab portion of a battery cell;
wherein the first driving assembly is configured to drive the supporting frame to drive the tab pressing plate to move in the first direction, so that the tab pressing plate is movable to be in contact with the tab portion and presses the tab portion onto a terminal post of the battery cell.

2. The tab bending mechanism according to claim 1, wherein
the supporting frame comprises a supporting main body, a first supporting member, and a second supporting member, the supporting main body is mounted on the first driving assembly, the first supporting member is mounted on the supporting main body, the second supporting member is mounted on the first supporting member, and the tab pressing plate is mounted on the second supporting member.

3. The tab bending mechanism according to claim 2, wherein
the tab bending mechanism further comprises a dedusting assembly, the dedusting assembly is mounted on the second supporting member and comprises an air extraction channel, and when the tab pressing plate moves to press the tab portion onto the terminal post of the battery cell, the dedusting assembly is driven by the second supporting member and enables the air extraction channel to be in gas communication with a region where the tab portion is located.

4. The tab bending mechanism according to claim 2, wherein
the supporting frame further comprises a second driving assembly, and the second driving assembly is connected between the first supporting member and the second supporting member, and is configured to drive the second supporting member to drive the tab pressing plate to perform a reciprocating movement relative to the tab portion of the battery cell in a second direction; the second direction is perpendicular to the first direction; and
the second driving assembly is configured to drive the second supporting member to drive the tab pressing plate to move to be in contact with the tab portion and pre-bend the tab portion.

5. The tab bending mechanism according to claim 4, wherein
the first driving assembly is configured to, after the second driving assembly drives the tab pressing plate to pre-bend the tab portion, drive the supporting frame to drive the tab pressing plate to press the tab portion onto the terminal post of the battery cell; or
the first driving assembly is configured to, while the second driving assembly drives the tab pressing plate to pre-bend the tab portion, drive the supporting frame to drive the tab pressing plate to press the tab portion onto the terminal post of the battery cell.

6. The tab bending mechanism according to claim 4, wherein
a position-limiting member is arranged on the first supporting member, and the position-limiting member is configured to perform position-limiting on the second supporting member when the second supporting member moves away from the tab portion in the second direction.

7. The tab bending mechanism according to claim 3, wherein
the dedusting assembly defines a light-transmitting structure in the first direction, and the light-transmitting structure is arranged toward the tab portion.

8. The tab bending mechanism according to claim 1, wherein
the tab bending mechanism further comprises a battery cell fixing assembly, and the battery cell fixing assembly is configured to support and fix the battery cell and to arrange the tab portion of the battery cell toward the tab pressing plate.

9. The tab bending mechanism according to claim 1, wherein
the tab bending mechanism further comprises a blowing assembly, and the blowing assembly is mounted on the supporting frame, and the blowing assembly has a blowing port; and
the blowing port faces a side surface of the tab portion and is configured to pre-bend the tab portion by blowing air to the side surface.

10. The tab bending mechanism according to claim 1, wherein
the first direction is a horizontal direction, and the tab pressing plate is configured to bend the tab portion vertically downward to press the tab portion onto a vertical surface of the terminal post.

11. The tab bending mechanism according to any one of claims 1 to 10, wherein
the tab pressing plate defines a hollow region, and when the tab pressing plate presses the tab portion onto the terminal post of the battery cell, the hollow region exposes a region to be welded of the tab portion.

12. A battery assembling system, comprising the tab bending mechanism according to any one of claims 1 to 11.

13. The battery assembling system according to claim 12, wherein
the battery cell comprises a case, an end cover, and an electrode assembly; the case has an open end, a terminal post is arranged on a wall of the case opposite to the open end, the terminal post has a through hole, and the case and the end cover are connected to form an accommodating cavity in communication with the through hole; an active substance coating portion of the electrode assembly is arranged in the case, and a tab portion of the electrode assembly penetrates through the through hole and is connected to a side of the terminal post facing away from the accommodating cavity;
the battery assembling system comprises a delivery device and an assembling device, the delivery device is configured to deliver a structure to be assembled to each station of the assembling device; the station of the assembling device at least comprises a tab welding apparatus, a case-put-in apparatus, a tab penetrating apparatus, a terminal post welding apparatus, and an end cover welding apparatus;
wherein the tab welding apparatus is configured to weld a plurality of tab plates of the electrode assembly to form a tab portion; the case-put-in apparatus is configured to load the electrode assembly into the case from the open end; the tab penetrating apparatus is configured to clamp the tab portion to penetrate through the through hole when the electrode assembly is loaded into the case; the terminal post welding apparatus comprises the tab bending mechanism according to any one of claims 1 to 11 and a welding mechanism, the welding mechanism is configured to weld the tab portion penetrating through the through hole and pressed onto the terminal post to the side of the terminal post facing away from the accommodating cavity, and the end cover welding apparatus is configured to weld the end cover to the open end of the case.
